## Europäisches Patentamt

## European Patent Office

## Office européen des brevets

(19)

(11) Numéro de publication: **0 091 384 B1**

(12) **FASCICULE DE BREVET EUROPEEN**

(45) Date de publication du fascicule du brevet:
**10.12.86**

(51) Int. Cl.⁴: **D 01 F 6/10,** C 08 J 3/08,
C 08 L 27/06

(21) Numéro de dépôt: **83420040.4**

(22) Date de dépôt: **11.03.83**

(54) Solutions à base de polychlorure de vinyle, leur procédé d'obtention et fils et fibres ainsi obtenus.

(30) Priorité: **01.04.82 FR 8205845**

(43) Date de publication de la demande:
**12.10.83 Bulletin 83/41**

(45) Mention de la délivrance du brevet:
**10.12.86 Bulletin 86/50**

(84) Etats contractants désignés:
**BE CH DE GB IT LI NL**

(56) Documents cités:
**EP - A - 0 053 991**

**"Encyclopedia of polymer science and technology",Wiley (1971), vol. 14, pages 476,477**

(73) Titulaire: **RHOVYL, 47, rue de Villiers,
F-92527 Neuilly-sur-Seine (FR)**

(72) Inventeur: **Achard, Georges, 2, Allée Gay Lussac,
F-69150 Decines (FR)**
Inventeur: **Menault, Jacques, 5, Avenue Louis Momet,
F-69260 Charbonnieres-les-Bains (FR)**
Inventeur: **Thouvenot, Roger, 91, rue Leroux,
F-55500 Ligny-en-Barrois (FR)**

(74) Mandataire: **Braconnier, Daniel et al, RHONE-POULENC
FIBRES Direction Technique Brevets Boîte Postal 82-41,
F-69355 Lyon Cédex 2 (FR)**

# Description

La présente invention concerne de nouvelles solutions homogènes, conformables à base de polychlorure de vinyle.

Elle concerne également le procédé d'obtention de telles solutions, les fils et fibres issus de ces solutions ainsi que le procédé d'obtention desdits fils et fibres.

Les fibres à base de polychlorure de vinyle connues jusque-là sont appréciées dans le domaine textile en raison de certaines propriétés particulières telles que ininflammabilité, triboélectricité négative, résistance à la lumière, inertie chimique et pouvoir d'isolation thermique, électrique et acoustique. Toutefois, le polychlorure de vinyle ordinaire, à prédominance atactique, seul ou mélangé avec du polychlorure de vinyle surchloré par exemple, présente dans certains solvants ou mélanges solvants des difficultés de mise en oeuvre à cause d'une mauvaise dispersabilité et d'une mauvaise dissolution conduisant à l'obtention de solutions de viscosité effective très importante (de l'ordre de plusieurs milliers de poises), ce qui rend leur filage difficile et ne permet pas l'obtention de filaments de titre fin et de bonne étirabilité, aussi bien en taux qu'en régularité, et a alors pour conséquence de limiter l'utilisation de tels fils et fibres.

Par ailleurs, il existe de très bons solvants du polychlorure de vinyle (diméthylformamide, diméthylsulfoxyde, etc.) conduisant à des solutions de bonne viscosité mais le filage à sec de ces solutions dans des solvants de point d'ébullition élevé nécessite l'utilisation de températures élevées provoquant la dégradation du polychlorure de vinyle.

Il a maintenant été trouvé de manière surprenante qu'il était possible de préparer des solutions de polychlorure de vinyle homogènes de faible viscosité à des températures de filage peu élevées, ce qui permet d'obtenir des filaments de très bonnes caractéristiques, possédant une grande régularité sur le même brin et d'un brin à l'autre.

La présente demande concerne plus particulièrement des solutions homogènes, filables à base de polychlorure de vinyle tel que défini ci-dessous, de concentration en polymère compris entre 15 et 35%, de préférence 22 et 32% en poids, ledit polymère ayant un poids moléculaire moyen en nombre compris entre 50 000 et 120 000, de préférence entre 60 000 et 90 000, de viscosité effective comprise entre 1,5 et 200 Pa · s dans un milieu solvant possédant à température ambiante un paramètre de solubilité S compris entre 16,35 et 22,48 (J/cm³)$^{1/2}$, une constante diélectrique comprise entre 5 et 25, et donnant avec le polychlorure de vinyle une variation de viscosité effective relative à la température représentée par une courbe

$$\frac{d\rho}{d\theta}$$

passant par un maximum en valeur absolue.

La présente invention concerne également un procédé pour l'obtention des solutions définies ci-dessus par chauffage d'une composition de polychlorure de vinyle dans le milieu solvant défini ci-dessus, de concentration comprise entre 15 et 35%, à une température supérieure d'au moins 25 °C à la température moyenne correspondant au maximum de la courbe

$$\frac{d\rho}{d\theta}.$$

Les solutions ainsi obtenues, lorsque la concentration n'est pas trop élevée, peuvent ensuite être refroidies à la température d'utilisation pouvant aller jusqu'à 60 °C.

La présente invention concerne également les filaments, fils et fibres possédant une contrainte de retrait d'au moins 0,12 · 10$^{-2}$N/tex, un taux de retrait résiduel dans l'eau bouillante inférieur à 2%, et une ténacité d'au moins 0,22 N/tex.

Elle concerne enfin un procédé d'obtention des filaments, fils et fibres par filage à sec de manière connue; étirage à un taux d'au moins 4 X, stabilisation en milieu fluide aqueux à une température au moins égale à 100 °C et rétraction en milieu fluide aqueux à température égale ou supérieure à 100 °C.

Par l'expression «polychlorure de vinyle» utilisée tout au long du texte, on entend:

– l'homopolymère de chlorure de vinyle ordinaire, à prédominance atactique (c'est-à-dire obtenu par polymérisation à chaud) de poids moléculaire moyen en nombre $\overline{M}n$ de 50 000 à 120 000, de préférence 60 000 à 90 000, et de température de transition du second ordre Tg 65 à 85 °C,

– les copolymères contenant au moins 85% en poids de chlorure de vinyle et jusqu'à 15% d'un comonomère copolymérisable avec le chlorure de vinyle tel que l'acétate de vinyle, les esters et éthers vinyliques et (méth)acryliques, l'acrylonitrile, les oléfines telles que l'éthylène, etc.,

– les mélanges de polychlorure de vinyle ou d'un copolymère de chlorure de vinyle tel que défini ci-dessus avec un autre polymère de manière à améliorer les caractéristiques des articles obtenus (affinité tinctoriale, tenue thermique par exemple).

Parmi ces polymères, on peut citer les esters cellulosiques, la cellulose cyanoéthylée, l'alcool polyvinyle modifié par des sites esters, ou cyanoéthylé, le polyacrylonitrile, le polychlorure de vinyle ou son copolymère étant présent en proportion d'au moins 75% dans le mélange de polymères mais à condition que le mélange de polymères obtenus comporte au moins 75% en poids d'unités chlorure de vinyle et que les solutions ainsi préparées soient homogènes.

Les solutions selon la présente invention possèdent en effet la caractéristique tout à fait surprenante de présenter une faible viscosité effective comprise entre 1,5 et 200 Pa · s, de préférence comprise entre 5 et 100 à des températures relativement basses à partir de 60 °C environ ce qui permet de les utiliser, en particulier de les filer à des températures pas trop élevées par exemple ne dégradant pas le polymère.

Dans le texte, la mesure de la viscosité effective est effectuée de la manière suivante:

Le solvant et le polymère préalablement refroidis à −10 °C sont mélangés et homogénéisés pendant 1 min à l'aide d'une turbine. Le mélange est introduit rapidement dans une cuve agitée et munie à son extrémité d'un piston. Ce piston pousse le mélange à un débit Q déterminé à travers un dissoluteur-homogénéiseur du type mélangeur statique. Il est porté à 120 °C. Puis il est refroidi à $\theta_1$, et véhiculé à cette température vers le viscosimètre.

Le viscosimètre est constitué d'un tube de 6 mm de diamètre et de 10 m de long.

Il est chauffé par double paroi à la température $\theta_1$. Deux sondes placées aux deux extrémités permettent de mesurer la différence de pression entre l'entrée et la sortie du tube $\Delta P$.

La pression dans tout l'appareillage est supérieure à 20 bars.

La viscosité effective $\eta_e$ est déterminée par la formule

$$\eta e = \frac{\Pi \Delta P.R^4}{8\,Q.L}$$

R étant le rayon du tube, L, sa longueur, et les mesures étant effectuées avec un gradient de 2,07 s⁻¹ et à une température de 90 °C.

Les solutions selon la présente invention sont également caractérisées par leur concentration de 15 à 35% en poids, de préférence 22 à 32%, dans un milieu solvant qui est lui-même défini par un paramètre de solubilité S compris entre 16,35 et 22,48 (J/cm³)½, tel que défini dans la revue «Encyclopedia of Polymer Science and Technology» – volume 10 – page 241, et une constante diélectrique comprise entre 5 et 25 de préférence entre 8 et 20 et qui donne, avec le polychlorure de vinyle par élévation de la température, une variation de la viscosité effective de la solution représentée par une courbe

$$\frac{d\rho}{d\theta}$$

passant par un maximum en valeur absolue.

Parmi les solvants convenant particulièrement pour l'obtention des solutions selon la présente demande, on peut citer l'acétone, les mélanges sulfure de carbone/acétone, etc.

L'acétone possède un coefficient de solubilité S de 19,95 (J/cm³)½ et une constante diélectrique de 17,7 et le mélange sulfure de carbone acétone à 50/50 en volume, utilisé dans les exemples possède un coefficient de solubilité S de 19,1 (J/cm³)½ et une constante diélectrique de 10,5 (à 22 °C et 120 kHz).

Les solutions selon l'invention sont obtenues par chauffage à une température supérieure d'au moins 25 °C à la température correspondant au maximum en valeur absolue de la courbe

$$\frac{d\rho}{d\theta}.$$

Ce maximum correspond en fait à une chute très rapide de la viscosité effective qui diminue brutalement de plusieurs milliers de poises à une valeur comprise entre 1,5 et 200 Pa · s dans un intervalle de température de l'ordre de 30 °C ou même moins.

De telles solutions présentent également de manière surprenante l'avantage de conserver leur niveau de viscosité effective comprise entre 1,5 et 200 Pa · s de préférence 5 et 100 Pa · s même par abaissement de la température.

L'évolution de la viscosité effective lors du refroidissement est visible sur la courbe

$$\frac{d\rho}{d\theta},$$

courbe qui est légèrement croissante avec la température décroissante et ne présente pas d'extremum.

Par ailleurs, la viscosité effective des solutions selon la présente demande dépend de certains facteurs en particulier la concentration desdites solutions; de ce fait:

– pour des concentrations élevées (de l'ordre d'au moins 30% par exemple), les solutions seront de préférence utilisées à des températures pas trop basses, par exemple au moins 80 ou 85 °C,

– pour des concentrations les plus faibles inversement les températures d'utilisation seront de préférence à 55 °C,

– pour les concentrations moyennes, de l'ordre de 25 à 27%, les températures d'utilisation seront par exemple de l'ordre de 70 à 75 °C.

De telles solutions qui peuvent être stockées sans que la viscosité effective augmente de manière importante sont particulièrement intéressantes pour l'obtention de filaments, fils et fibres qui présentent des propriétés remarquables:

– une contrainte de retrait d'au moins 0,12 · 10¹⁰⁻² N/tex et un taux de retrait résiduel dans l'eau bouillante inférieur à 2%.

La contrainte de retrait des filaments est mesurée au moyen d'un rétractomètre: les échantillons de filaments de longueur 4 cm, assemblés sous forme d'éprouvettes de titre 400 dtex en moyenne, avec une prétension de 0,17 · 10⁻² N/tex (chaque essai étant effectué sur deux éprouvettes) sont soumis, après chacune des différentes étapes d'étirage, de stabilisation et enfin de rétraction, à une élévation de température de 1 °C par minute, de 30 °C à 170 °C. On mesure la force de rétraction exprimée en 10⁻² N/tex sur chaque éprouvette en fonction de la température. Cette contrainte de retrait ou force de retrait passe dans chaque cas par un maximum à une certaine température. C'est cette force de retrait maximale qui représente la caractéristique d'orientation moléculaire des produits, que l'on désigne par contrainte de retrait.

Les fils et fibres selon la présente invention possèdent après la dernière phase du procédé, à savoir la rétraction libre dans un fluide aqueux, une contrainte de retrait d'au moins 0,12 · 10⁻² N/tex, généralement au moins 0,17 · 10⁻² N/tex selon le traitement ultérieur subi par les filaments.

Le retrait résiduel dans l'eau bouillante est généralement mesuré après tous les traitements sur fils, en particulier après le traitement de rétraction libre en fluide aqueux.

En outre, les fils et fibres selon la présente invention possèdent une bonne ténacité, généralement supérieure à 0,22 N/tex, de préférence au moins 0,25 N/tex et un allongement pas trop élevé, inférieur à 70%, de préférence inférieur à 60%, ce qui est tout à fait remarquable pour des filaments à base de polychlorure de vinyle ordinaire.

Les caractéristiques des fils et fibres obtenus sont largement du niveau des fibres à base de mélanges polychlorure de vinyle/polychlorure de vinyle surchloré tels que décrits dans le brevet français 1 359 178 et son addition n° 85 126. Elles atteignent même facilement le niveau des fibres à base de mélanges polychlorure de vinyle/ polychlorure de vinyle surchloré fixé en présence de vapeur d'eau sous pression telles que décrites dans la demande européenne EP-A-0 053 991 (date de dépôt 29.10.81; priorité 8.12.80; date de publication 16.6.82).

De plus, une meilleure homogénéité des solutions selon la présente demande permet d'obtenir une vitesse de filage plus importante due vraisemblablement à une meilleure dissolution du polymère.

L'augmentation de débit à la filière est de l'ordre de 300%.

Par ailleurs, il est aussi possible d'obtenir des fibres de titre plus fin, pouvant descendre jusqu'à 1,5 ou 1,3 dtex au brin alors qu'avec les procédés connus jusque-là, dans les meilleures conditions, il n'était pas possible d'obtenir des titres inférieurs à 2,5 dtex au brin.

Les filaments et fibres selon la présente invention sont obtenus par filage à sec (selon tout procédé connu) des solutions décrites ci-dessus; la température de la filière pouvant être moins élevée que dans le filage à sec habituel, puis lesdits filaments sont étirés pour leur conférer une orientation moléculaire et améliorer leurs caractéristiques mécaniques, à un taux d'au moins 4 X, de préférence au moins 6 X et pouvant aller jusqu'à 9 X ou même plus.

L'étirage peut être effectué en un ou deux stades, de préférence dans des bains aqueux dont la température est croissante, le dernier pouvant être égal ou supérieur à la température d'ébullition.

Les filaments peuvent aussi être préchauffés avant l'étirage par exemple dans l'eau à des températures comprises entre 60 et 100°C de préférence entre 75 et 85°C. Le préétirage peut être effectué dans un bain d'eau à température comprise entre 70 et 95°C, puis le second étirage, à température supérieure, par exemple entre 85 et 105°C; éventuellement les bains d'étirage peuvent être munis d'un tube dans lequel passent les filaments.

Les filaments ainsi étirés subissent ensuite une stabilisation sous tension en continu pour éviter tout retrait, par exemple dans un bain d'eau bouillante pendant plusieurs secondes, généralement au moins 5 secondes, ou de préférence en présence de vapeur d'eau sous pression à une température comprise entre 105 et 130°C, de préférence entre 110–120°C, pendant 1 à 3 secondes.

Après stabilisation ils sont soumis de préférence en continu à une rétraction libre qui peut être effectuée dans l'eau bouillante pendant une durée variable, par exemple au moins 10 minutes, en général 10 à 20 minutes ou même plus ou dans la vapeur d'eau saturée par exemple par passage dans une buse telle que celle décrite dans le brevet français 83 329/1 289 491. Dans une telle buse les filaments sont traités par de la vapeur d'eau saturée à une température comprise entre 110 et 130° et sont simultanément rétractés et frisés ce qui permet une meilleure travaillabilité textile ultérieure.

Dans le cas où la rétraction est effectuée dans l'eau bouillante celle-ci est de préférence précédée d'un frisage mécanique selon tout procédé connu, également dans le but de faciliter la travaillabilité ultérieure.

Le procédé selon la présente invention peut être réalisé totalement en continu depuis l'étirage ou même depuis la dissolution des polymères jusqu'à l'obtention des fils ou fibres définitifs. De ce fait, il est facile à réaliser industriellement de manière économique.

Les polymères ou solutions filées selon la présente demande peuvent contenir des charges habituelles telles que des stabilisants vis-à-vis de la lumière, de la chaleur, azurants, pigments, colorants susceptibles d'améliorer certaines de leurs propriétés telles que leur couleur, l'affinité tinctoriale, la stabilité thermique et à la lumière, la résistivité électrique …

Dans les exemples ci-dessous, les mesures de ténacité et d'allongement sont effectuées au moyen d'un appareil connu dans le commerce sous la marque «INSTRON», par mesure de la force maximale que supporte un échantillon, rapportée à son titre, cette force étant mesurée à gradient d'allongement constant.

Les filaments, fils, fibres obtenus selon la présente demande sont utilisés pour la réalisation de tissus, tricots, structures non tissées, seuls ou en mélange ou association avec d'autres textiles, employés dans l'habillement, l'ameublement et la réalisation d'articles textiles à usage industriel.

Les exemples qui suivent, dans lesquels les parties s'entendent en poids, sont donnés à titre indicatif mais non limitatif.

Exemple 1

On mélange dans un disperseur à température de −5°C du polychlorure de vinyle ordinaire ayant un taux de chlore de 56,5%, un poids moléculaire moyen en nombre de 54 000 environ, un indice AFNOR 120, contenant 3 pour 1 000 par rapport au polymère d'un mélange de thioglycolates de dioctylétain et de monooctylétain, avec un mélange solvant acétone/sulfure de carbone en proportion volumique de 50/50 de manière à obtenir une concentration en polymère de 30% en poids, à température ambiante. Viscosité effective: au moins 1 000 Pa·s. Le mélange ainsi obtenu est envoyé dans un échangeur de température où il est chauffé à 120 °C pendant 10 minutes.

La solution ainsi préparée de viscosité effective 40 Pa · s est filtrée puis filée à 85 °C à travers une filière de diamètre 156 mm comportant 908 orifices de diamètre 0,06 mm chacun où le mélange solvant est évaporé (selon un procédé décrit dans le brevet français 913 927). A la sortie de la filière les filaments ont un titre au brin de 7 dtex.

Les filaments passent ensuite dans un bain d'eau maintenu à 85 °C où ils sont préchauffés pendant 10 secondes puis étirés une première fois à un taux de 3,5 X dans un bain d'eau maintenu à 91 °C, puis une seconde fois à un taux de 2,28 X dans un bain d'eau sous pression à 103 °C de manière à obtenir un taux global d'étirage de 8 X.

Les filaments ainsi étirés subissent ensuite une fixation sous tension dans un bain d'eau bouillante pendant 10 secondes puis une rétraction libre dans l'eau bouillante pendant 20 minutes.

Les fibres ainsi obtenues possèdent les caractéristiques suivantes:

| | |
|---|---|
| titre – dtex | 1,5 |
| ténacité – N/tex | 0,22 |
| allongement – % | 68 |
| retrait résiduel dans l'eau bouillante – % | <1 |
| contrainte de retrait – N/tex | $0,12 \cdot 10^{-2}$ |

Exemple 2
Essai comparatif:

On prépare une solution de polychlorure de vinyle à prédominance atactique (indice AFNOR: 120 – taux de chlore: 56,5%) dans un élange solvant sulfure de carbone/acétone à 50/50 en volume, de concentration en polymère de 28%, par agitation pendant 7 heures à température ambiante. La solution est filée alors qu'elle est maintenue à 70 °C et qu'elle présente une viscosité effective de 1 000 Pa · s. Le filage est effectué à travers une filière de 156 mm de diamètre, comportant 908 orifices de diamètre 0,06 mm chacun dans une cellule de filage à sec dont la température des parois est 88 °C permettant la récupération continue du mélange solvant.

Les filaments de titre au brin 7 dtex sont préchauffés dans un bain d'eau maintenu à 80 °C puis étirés dans un bain d'eau maintenu à 81 °C, à un taux de 3,50 X, puis de nouveau étirés dans un bain d'eau à 98 °C à un taux de 1,35 X de manière à obtenir un étirage total de 4,45 X.

Les filaments sont ensuite stabilisés dans un bain d'eau bouillante à 98 °C sous tension pendant 10 secondes avant d'être rétractés également dans un bain d'eau bouillante pendant 10 minutes.

Les filaments ainsi obtenus possèdent les caractéristiques suivantes:

| | |
|---|---|
| titre – dtex | 2,6 |
| ténacité – N/tex | 0,17 |
| allongement – % | 94 |
| retrait résiduel dans l'eau bouillante – % | <2 |
| contrainte de retrait – N/tex | $0,069 \cdot 10^{-2}$ |

Exemple 3

On répète l'exemple 1 mais au lieu d'être stabilisés dans l'eau bouillante à 100 °C, les filaments sont fixés sous tension par passage dans un tube à une température de 120 °C pendant 2 secondes en présence de vapeur d'eau sous pression avant d'être rétractés dans l'eau bouillante pendant 20 minutes.

Les filaments obtenus possèdent les caractéristiques suivantes:

| | |
|---|---|
| titre au brin sortie filage – dtex | 7 |
| titre – dtex | 1,3 |
| ténacité – N/tex | 0,25 |
| allongement – % | 53 |
| retrait résiduel dans l'eau bouillante – % | <2 |
| contrainte de retrait – N/tex | $0,18 \cdot 10^{-2}$ |

Exemple 4
Essai comparatif

On répète l'exemple 2, mais au lieu d'être stabilisés dans l'eau bouillante, les filaments sont fixés sous tension par passage dans un tube à une température de 120 °C pendant 2 secondes en présence de vapeur d'eau sous pression avant d'être rétractés dans l'eau bouillante pendant 20 minutes.

Les filaments obtenus possèdent les caractéristiques suivantes:

| | |
|---|---|
| titre au brin sortie filage – dtex | 7 |
| titre final – dtex | 2,5 |
| ténacité – N/tex | 0,21 |
| allongement – % | 75 |
| contrainte de retrait – N/tex | $0,11 \cdot 10^{-2}$ |

Les essais 1 à 4 sont effectués avec des titres au brin identiques à la sortie du filage (7 dtex).

Exemple 5

Les exemples 5 à 8 sont effectués avec des titres au brin identiques sur les fils finis.

On répète l'exemple 1 en ce qui concerne la préparation de la solution, qui possède après chauffage à 120 °C une viscosité effective de 40 Pa · s.

La solution est filée à travers une filière dont les orifices ont un diamètre de 0,07 mm et les filaments sont ensuite traités dans les conditions de l'exemple 1.

Ils possèdent les caractéristiques suivantes:

| | |
|---|---|
| titre au brin sortie filage – dtex | 15 |
| titre au brin sur fibre finie – dtex | 3,3 |
| allongement – % | 67 |
| ténacité – N/tex | 0,22 |
| contrainte de retrait – N/tex | $0,17 \cdot 10^{-2}$ |

Exemple 6
Essai comparatif:

On reproduit l'exemple 2 en modifiant le débit d'alimentation à la filière de sorte que les filaments possèdent à la sortie du filage un titre au brin de 9 dtex. Les filaments sont ensuite traités dans les conditions indiquées dans l'exemple 2.

Ils possèdent les caractéristiques suivantes:

| | |
|---|---|
| titre au brin sortie filage – dtex | 9 |
| titre au brin final – dtex | 3,3 |
| ténacité – N/tex | 0,18 |
| allongement – % | 92 |
| contrainte de retrait – N/tex | $0,083 \cdot 10^{-2}$ |

**Exemple 7**

On reproduit l'exemple 3, en modifiant le débit d'alimentation à la filière de sorte que les filaments possèdent à la sortie du filage un titre au brin de 18 dtex et en utilisant une filière dont les orifices ont un diamètre de 0,07 mm.

Les filaments sont ensuite traités dans les conditions données dans l'exemple 3, excepté le 2ème étirage dont le taux est de 2,31 X, le taux global d'étirage étant de 8,1 X.

Ils possèdent les caractéristiques suivantes:

| | |
|---|---|
| titre au brin sortie filage – dtex | 18 |
| titre au brin sur fibre finie – dtex | 3,3 |
| ténacité – N/tex | 0,25 |
| allongement – % | 54 |
| contrainte de retrait – N/tex | $0,21 \cdot 10^{-2}$ |
| retrait résiduel dans l'eau bouillante – % | <2 |

**Exemple 8**

Essai comparatif:

On reproduit l'exemple 4 en réglant le débit de la solution à la filière de manière à obtenir des filaments de titre au brin à la sortie du filage de 10 dtex. Les filaments sont ensuite traités selon l'exemple 4.

Ils possèdent les caractéristiques suivantes:

| | |
|---|---|
| titre au brin sortie filage – dtex | 10 |
| titre au brin sur fibre finie – dtex | 3,3 |
| allongement – % | 72 |

| | |
|---|---|
| ténacité – N/tex | 0,21 |
| contrainte de retrait – N/tex | $0,11 \cdot 10^{-2}$ |

Le taux d'étirage de 4,45 X est considéré comme le taux maximum d'étirage pouvant être réalisé industriellement, c'est-à-dire sans l'obtention de brins cassés non étirés, c'est-à-dire moins de 2/1000 g dans le cas de filage réalisé jusqu'à présent, c'est-à-dire avec des mélanges polymère/solvant non réchauffés selon l'invention et avec un traitement de fixation des filaments dans l'eau bouillante.

De ce fait, il n'est pas possible d'obtenir par ce procédé des titres au brin 1,5 dtex avec le taux maximum de 4,45 X.

**Exemples 9 à 11**

Les exemples 9 et 10, selon l'invention, sont réalisés pour l'obtention de titre fin sur fibre terminée (1,5 dtex).

Ces exemples sont réalisés dans les conditions de l'exemple 3 en réglant les débits d'alimentation en solution de la filière, les filaments étant ensuite fixés sous tension dans la vapeur d'eau sous pression à 120 °C pendant 2 secondes.

L'exemple comparatif 11 est réalisé pour l'obtention de fibres de titre le plus faible possible dans les conditions décrites dans l'exemple 4.

Le tableau ci-dessous résume les caractéristiques obtenues:

| | Ex. 9 selon l'invention | Ex. 10 | Ex. 11 comparatif |
|---|---|---|---|
| titre au brin sortie filage – dtex | 7,5 | 8,3 | 5,2 |
| taux d'étirage – X | 8,0 | 8,0 | 4,45 |
| titre au brin sur fibre finie | 1,5 | 1,5 | 2 |
| ténacité – N/tex | 0,25 | 0,26 | 0,21 |
| allongement – % | 55,4 | 55,3 | 72 |
| contrainte de retrait – N/tex | $0,20.10^{-2}$ | $0,21.10^{-2}$ | $0,11.10^{-2}$ |
| retrait résiduel dans l'eau bouillante % | <2 | <2 | <2 |

**Exemple 12**

On mélange dans un disperseur du polychlorure de vinyle ordinaire ayant un taux de chlore de 56,5%, de poids moléculaire moyen en nombre de 54 000 environ, et indice AFNOR: 120, contenant 3 pour 1000 par rapport au polymère d'un mélange de thioglycolates de dioctylétain et de monooctylétain, avec de l'acétone pur, de manière à obtenir une concentration en polymère de 29% en poids, à température ambiante – viscosité effective supérieure à 1000 Pa · s. Le mélange ainsi obtenu est envoyé dans un échangeur de température où il est chauffé à 120 °C pendant 20 minutes puis refroidi à 80 °C.

La solution ainsi préparée de viscosité effective 280 poises est filtrée puis filée à travers une filière de 80 orifices de diamètre 0,07 mm où le solvant est évaporé.

Les filaments ainsi obtenus sont ensuite étirés dans un bain d'eau bouillante à un taux de 7,1 X, puis fixés sous tension pendant 2 secondes en présence de vapeur d'eau sous pression et rétractés librement dans un bain d'eau bouillante pendant 20 minutes.

Les filaments obtenus possèdent les caractéristiques suivantes:

titre au brin après filage – dtex 16
titre au brin sur fibre finie – dtex 3,3
ténacité – N/tex 0,23
allongement – % 61
retrait résiduel dans l'eau bouillante – % <1
contrainte de retrait – N/tex $0,19 \cdot 10^{-2}$

Exemple 13

Dans un récipient agité, on introduit de l'acétone pure, de l'acétate de cellulose de titre en acide acétique 54,8% et après 30 minutes on ajoute le polychlorure de vinyle tel que décrit dans l'exemple 1. On obtient une suspension que l'on chauffe à 120°C en continu et qui est refroidie à 90°C puis filée à travers une filière de 80 orifices de diamètre 0,07 mm.

Les filaments sont étirés en une seule fois dans un bain d'eau bouillante à un taux de 7,2 X puis fixés dans un tube en présence de vapeur d'eau sous pression à 120°C pendant 2 secondes et rétractés dans l'eau bouillante pendant 20 minutes.

Les filaments obtenus possèdent les caractéristiques suivantes:

titre au brin sortie filage – dtex 17
titre au brin sur fibre finie – dtex 3,7
ténacité – N/tex 0,22
allongement – % 70
contrainte de retrait – N/tex $0,16 \cdot 10^{-2}$
retrait résiduel dans l'eau bouillante – % <1
retrait résiduel en présence
de vapeur à 130°C – % <5

**Revendications**

1. Solutions conformables homogènes à base de polychlorure de vinyle, caractérisées par le fait qu'elles possèdent une concentration en polymère comprise entre 15 et 35% en poids, ledit polymère ayant un poids moléculaire moyen en nombre compris entre 50 000 et 120 000, une viscosité effective comprise entre 1,5 et 200 Pa·s, dans un milieu solvant possédant à température ambiante un paramètre de solubilité S compris entre 16,35 et 22,48 $(J/cm^3)^{\frac{1}{2}}$, une constante diélectrique mesurée à 22°C et 120 kHz comprise entre 5 et 25 et donnant avec le polychlorure de vinyle une variation de viscosité effective relative à la température représentée par une courbe

$$\frac{d\rho}{d\theta}$$

passant par un maximum en valeur absolue.

2. Solutions selon la revendication 1, caractérisées par le fait que la viscosité effective est comprise entre 5,0 et 100 Pa·s.

3. Solutions selon la revendication 1, caractérisées par le fait que le milieu solvant utilisé est choisi parmi l'acétone et les mélanges sulfure de carbone/acétone.

4. Procédé pour l'obtention des solutions selon la revendication 1, caractérisé par le fait que l'on chauffe une composition de polychlorure de vinyle de concentration 15 à 35% en poids dans un milieu solvant possédant un paramètre de solubilité S compris entre 16,35 et 22,48 $(J/cm^3)^{\frac{1}{2}}$, une constante diélectrique mesurée à 22°C et 120 kHz comprise entre 5 et 25 et donnant avec le polychlorure de vinyle une variation de viscosité effective relative à la température

$$\frac{d\rho}{d\theta}$$

passant par un maximum en valeur absolue, à une température supérieure d'au moins 25°C, à la température correspondant audit maximum.

5. Procédé selon la revendication 4, caractérisé par le fait que les solutions sont refroidies à une température pouvant descendre jusqu'à 60°C.

6. Filaments, fils, fibres à base de polychlorure de vinyle, caractérisés par le fait qu'ils possèdent une contrainte de retrait d'au moins $0,12 \cdot 10^{-2}$ N/tex, un taux de retrait résiduel dans l'eau bouillante inférieur à 2%, et une ténacité d'au moins 0,22 N/tex.

7. Procédé pour l'obtention des filaments, fils, fibres selon la revendication 6, caractérisé par le fait que l'on file à sec des solutions à base de polychlorure de vinyle de concentration 15 à 35% en poids, de viscosité effective comprise entre 1,5 et 200 Pa·s dans un milieu solvant ayant un paramètre de solubilité S compris entre 16,35 et 22,48 $(J/cm^3)^{\frac{1}{2}}$, et une constante diélectrique mesurée à 22°C et 120 kHz comprise entre 5 et 25, et donnant avec le polychlorure de vinyle une variation de viscosité effective relative à la température représentée par une courbe

$$\frac{d\rho}{d\theta}$$

passant par un maximum en valeur absolue

– l'on étire les filaments à un taux d'au moins 4 X
– l'on fixe les filaments à une température d'au moins 100°C en milieu aqueux
– l'on rétracte les filaments à l'état libre en milieu fluide aqueux à température supérieure ou égale à 100°C.

8. Procédé selon la revendication 7 dans lequel les filaments sont étirés à un taux d'au moins 7 X.

9. Procédé selon la revendication 7 dans lequel les filaments sont étirés en deux stades.

10. Procédé selon la revendication 7 dans lequel les filaments sont fixés en présence de vapeur d'eau sous pression à une température comprise entre 105°C et 130°C pendant 1 à 3 secondes.

**Claims**

1. Homogeneous solutions based on polyvinyl chloride, which can be shaped, characterised in that they have a polymer concentration of between 15 and 35% by weight, the said polymer having a number-average molecular weight of between 50 000 and 120 000 and an effective viscosity of between 1.5 and 200 Pa·s in a solvent medium which has, at ambient temperature, a solubility parameter S of between 16.35 and 22.48 $(J/cm^3)^{1/2}$ and a dielectric constant (measured at 22 °C and 120 kHz) of between 5 and 25, and which gives, with polyvinyl chloride, a variation in effective viscosity with temperature, represented by a curve

$$\frac{d\rho}{d\theta},$$

which passes through a maximum absolute value.

2. Solutions according to Claim 1, characterised in that the effective viscosity is between 5 and 100 Pa · s.

3. Solutions according to Claim 1, characterised in that the solvent medium used is chosen from amongst acetone and carbon disulphide/acetone mixtures.

4. Process for the preparation of the solutions according to Claim 1, characterised in that a composition of polyvinyl chloride having a concentration of 15 to 35% by weight, in a solvent medium which has a solubility parameter S of between 16.35 and 22.48 $(J/cm^3)^{1/2}$ and a dielectric constant (measured at 22 °C and 120 kHz) of between 5 and 25, and which gives, with polyvinyl chloride, a variation in effective viscosity with temperature,

$$\frac{d\rho}{d\theta},$$

which passes through a maximum absolute value, at a temperature which is a least 25 °C higher than the temperature corresponding to the said maximum.

5. Process according to Claim 4, characterised in that the solutions are cooled to a temperature which can be as low as 60 °C.

6. Filaments, yarns and fibres based on polyvinyl chloride, characterised in that they have a shrinkage force of a least $0.12 \cdot 10^{-2}$ N/tex, a residual shrinkage in boiling water of less than 2% and a tenacity of at least 0.22 N/tex.

7. Process for the production of the filaments, yarns and fibres according to Claim 6, characterised in that solutions based on polyvinyl chloride, having a concentration of 15 to 35% by weight and an effective viscosity of between 1.5 and 200 Pa · s in a solvent medium which has a solubility parameter S of between 16.35 and 22.48 $(J/cm^3)^{1/2}$ and a dielectric constant measured at 22 °C and 120 kHz of between 5 and 25, and which gives, with polyvinyl chloride, a variation in effective viscosity with temperature, represented by a curve

$$\frac{d\rho}{d\theta},$$

which passes through a maximum absolute value, are dry-spun, the filaments are stretched in a ratio of a least 4 X, the filaments are set at a temperature of a least 100 °C in an aqueous fluid medium, and the filaments are shrunk in the free state in an aqueous fluid medium at a temperature greater than or equal to 100 °C.

8. Process according to Claim 7, in which the filaments are stretched in a ratio of at least 7 X.

9. Process according to Claim 7, in which the filaments are stretched in two stages.

10. Process according to Claim 7, in which the filaments are set in the presence of pressurised steam at a temperature of between 105 °C and 130 °C for 1 to 3 seconds.

**Patentansprüche**

1. Verformbare homogene Lösungen auf Basis von Polyvinylchlorid, dadurch gekennzeichnet, dass sie eine Konzentration an Polymerem zwischen 15 und 35 Gew.-% besitzen, wobei dieses Polymere ein mittleres zahlenmässiges Molekulargewicht zwischen 50 000 und 120 000 hat, eine effektive Viskosität zwischen 1,5 und 200 Pa · s in einem Lösungsmittelmilieu hat, das bei Umgebungstemperatur einen Löslichkeitsparameter S zwischen 16,35 und 22,48 $(J/cm^3)^{1/2}$ besitzt, eine Dielektrizitätskonstante, gemessen bei 22 °C und 120 kHz, zwischen 5 und 25 und mit dem Polyvinylchlorid eine Variation der effektiven Viskosität in Bezug auf die Temperatur, die durch eine Kurve

$$\frac{d\rho}{d\theta}$$

verkörpert wird, die durch ein Maximum an absolutem Wert passiert, ergibt.

2. Lösungen gemäss Anspruch 1, dadurch gekennzeichnet, dass die effektive Viskosität zwischen 5,0 und 100 Pa · s liegt.

3. Lösungen gemäss Anspruch 1, dadurch gekennzeichnet, dass das verwendete Lösungsmittelmilieu ausgewählt ist unter Aceton und den Mischungen Schwfelkohlenstoff/Aceton.

4. Verfahren zur Erzielung der Lösungen gemäss Anspruch 1, dadurch gekennzeichnet, dass man eine Polyvinylchloridzusammensetzung der Konzentration 15 bis 35 Gew.-% in einem Lösungsmittelmilieu, das einen Löslichkeitsparameter S zwischen 16,35 und 22,48 $(J/cm^3)^{1/2}$ besitzt, eine Dielektrizitätskonstante, gemessen bei 22 °C und 120 kHz, zwischen 5 und 25 hat und mit dem Polyvinylchlorid eine Variation der effektiven Viskosität in Bezug auf die Temperatur

$$\frac{d\rho}{d\theta},$$

die durch ein Maximum an absolutem Wert passiert, ergibt, auf eine Temperatur erhitzt, die mindestens 25 °C oberhalb der diesem Maximum entsprechenden Temperatur ist.

5. Verfahren gemäss Anspruch 4, dadurch gekennzeichnet, dass die Lösungen auf eine Temperatur gekühlt werden, die bis auf 60 °C fallen kann.

6. Filamente, Fäden, Fasern auf Basis von Polyvinylchlorid, dadurch gekennzeichnet, dass sie eine Schrumpfungsspannung von mindestens $0,12 \cdot 10^{-2}$ N/tex, einen Restschrumpfungswert in siedendem Wasser unterhalb 2% und eine Reisslänge von mindestens 0,22 N/tex besitzen.

7. Verfahren zur Erzielung von Filamenten, Fäden, Fasern gemäss Anspruch 6, dadurch gekennzeichnet, dass man Lösungen auf Basis von Polyvinylchlorid der Konzentration 15 bis 35 Gew.-%,

der effektiven Viskosität zwischen 1,5 und 200 Pa · s in einem Lösungsmittelmilieu, das einen Löslichkeitsparameter S zwischen 16,35 und 22,48 (J/cm³)^½ hat und eine Dielektrizitätskonstante, gemessen bei 22°C und 120 kHz, zwischen 5 und 25 besitzt, und mit dem Polyvinylchlorid eine Variation der effektiven Viskosität in Bezug auf die Temperatur, die durch eine Kurve

$$\frac{d \rho}{d \theta}$$

dargestellt wird, die durch ein Maximum an absolutem Wert passiert, ergibt, trocken verspinnt,
– dass man die Fäden auf einen Wert von mindestens Vierfach verstreckt,
– dass man die Filamente bei einer Temperatur von mindestens 100°C in wässrigem Milieu fixiert,

– dass man die Filamente in freiem Zustand in wässrig-fluidem Milieu bei einer Temperatur oberhalb oder gleich 100°C schrumpft.

8. Verfahren gemäss Anspruch 7, dadurch gekennzeichnet, dass die Fäden auf einen Wert von mindestens Siebenfach verstreckt werden.

9. Verfahren gemäss Anspruch 7, dadurch gekennzeichnet, dass die Fäden in zwei Stufen verstreckt werden.

10. Verfahren gemäss Anspruch 7, dadurch gekennzeichnet, dass die Fäden in Gegenwart von Wasserdampf unter Druck bei einer Temperatur zwischen 105°C und 130°C während einer bis drei Sekunden fixiert werden.